# EUROPEAN PATENT SPECIFICATION

(11) **EP 4 020 850 B1**
(45) Date of publication and mention of the grant of the patent: **21.08.2024**
(21) Application number: 21197317.7
(22) Date of filing: 17.09.2021
(51) Int. Cl.: H04B 11/00, B60R 16/037, G08C 23/02, H04W 4/48, H04W 4/80, G01H 17/00

(54) **REMOTE CONTROLLER, COMMUNICATION-ENVIRONMENT SENDING DEVICE, AND COMMUNICATION-ENVIRONMENT CHECK METHOD**
FERNSTEUERUNG, KOMMUNIKATIONSUMGEBUNGSSENDEVORRICHTUNGEN UND KOMMUNIKATIONSUMGEBUNGSPRÜFVERFAHREN
COMMANDE À DISTANCE, DISPOSITIF D'ENVOI D'ENVIRONNEMENT DE COMMUNICATION, ET PROCÉDÉ DE VÉRIFICATION D'ENVIRONNEMENT DE COMMUNICATION

(30) Priority: 22.12.2020 JP 2020212383
(43) Date of publication of application: 29.06.2022
(73) Proprietor: Suzuki Motor Corporation, Shizuoka 432-8611 (JP)
(72) Inventor: MIURA, Shin, Shizuoka, Hamamatsu-shi, 432-8611 (JP)
(74) Representative: Haseltine Lake Kempner LLP

(56) References cited:
- WO-A1-2019/077594
- US-A1- 2015 243 163
- US-A1- 2017 064 747

## Description

### BACKGROUND OF THE INVENTION

### Field of the Invention

Embodiments of the present invention relate to a quality checking technique for ultrasonic communication to be performed between an in-vehicle device and a control terminal.

### Description of the Related Art

In recent years, technology has been developed for a driver in a traveling vehicle to remotely control in-vehicle devices such as an air conditioner and a navigation system with the use of a portable terminal or a remote controller (hereinafter, collectively referred to as a "control terminal"). Radio wave communication or infrared communication is often used as a means of the communication between the in-vehicle device and the control terminal, in addition to ultrasonic communication using ultrasonic waves.

Patent Document 1 (JP 2015-063284 A) discloses conventional technique.

Since ultrasonic waves are susceptible to radio disturbance due to disturbance factors such as environmental sound in the inaudible sound range (about 18 kHz or more) to be used for ultrasonic communication, the contents of ultrasonic communication may not be correctly received by the receiving terminal. For example, the sound of rubbing a vinyl bag contains a frequency component in the inaudible range, which is a factor that hinders ultrasonic communication.

However, a user cannot perceive ultrasonic waves and the occurrence of such a disturbance, and thus, the user cannot know whether the system is in the state of being ready for use or not.

WO 2019/077594 A1 relates to a communication management and communicating between a communication device and another device using ultra-sonic signals, but does not disclose calculating and displaying a propagability index of an ultrasonic signal from the information related to noise sound inside a vehicle. US 2017/064747 A1 relates to a method of pairing vehicular terminal and user terminal by using beacon and vehicular terminal.

### SUMMARY OF THE INVENTION

In view of the above-described circumstances, an object of the present invention is to provide a remote controller according to claim 1, a communication-environment sending device according to claim 5, and a communication-environment check method according to claim 7. each of which enables a user to check communication environment of ultrasonic communication.

### BRIEF DESCRIPTION OF THE DRAWINGS

In the accompanying drawings:
Fig. 1 is a conceptual configuration diagram illustrating a vehicle in which the remote controller according to the first embodiment and target in-vehicle devices are installed;
Fig. 2A and Fig. 2B are schematic diagrams illustrating a smartphone that is one aspect of the remote controller according to the first embodiment;
Fig. 3 is a schematic view of the inside of the vehicle provided with the communication-environment sending device according to the first embodiment and the target in-vehicle devices, when viewed from the roof side;
Fig. 4 is a schematic view of the periphery of an inner panel provided with the communication-environment sending device according to the first embodiment;
Fig. 5 is a flowchart illustrating an operation procedure of the remote controller and the communication-environment sending device according to the first embodiment;
Fig. 6 is a schematic diagram illustrating the relationship between air-flow volume and correction amount in the second embodiment;
Fig. 7 is a map illustrating the relationship between speed and acceleration and correction amount in the second embodiment; and
Fig. 8 is a flowchart illustrating the operation of the remote controller according to the third embodiment.

### DETAILED DESCRIPTION

Hereinbelow, embodiments of the present invention will be described by referring to the accompanying drawings.

### (First Embodiment)

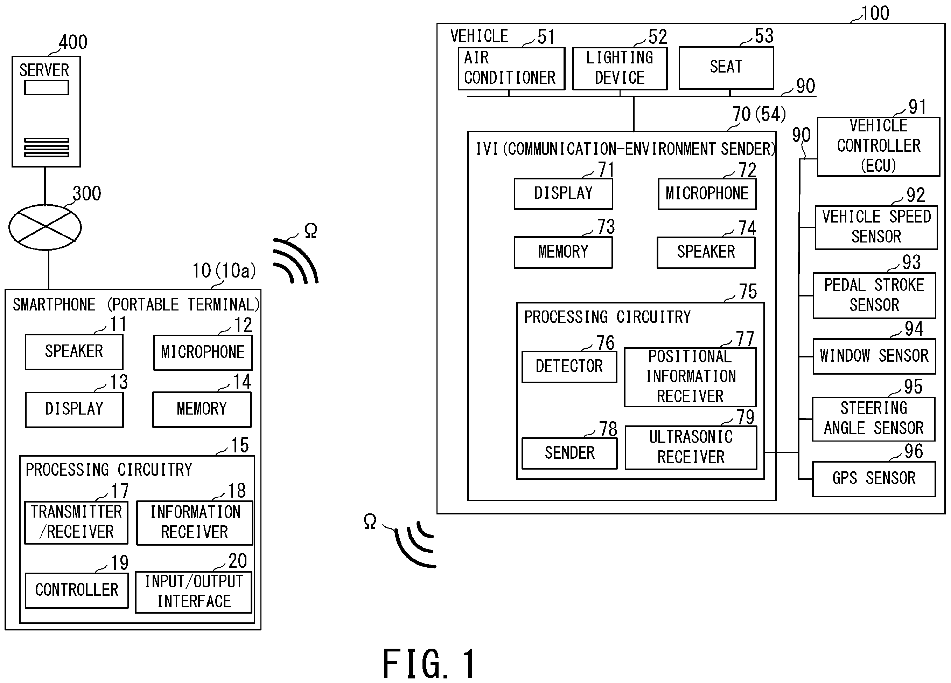

First, a description will be given of a remote controller 10 and in-vehicle devices 51, 52, 53, and 54 (hereinafter, referred to as "target in-vehicle devices 51 to 54"), which are operated by this remote controller 10 with the use of an ultrasonic signal Ω, by referring to Fig. 1 to Fig. 4.

Fig. 1 is a conceptual configuration diagram illustrating a vehicle 100 in which the remote controller 10 according to the first embodiment and the target in-vehicle devices 51 to 54 are installed.

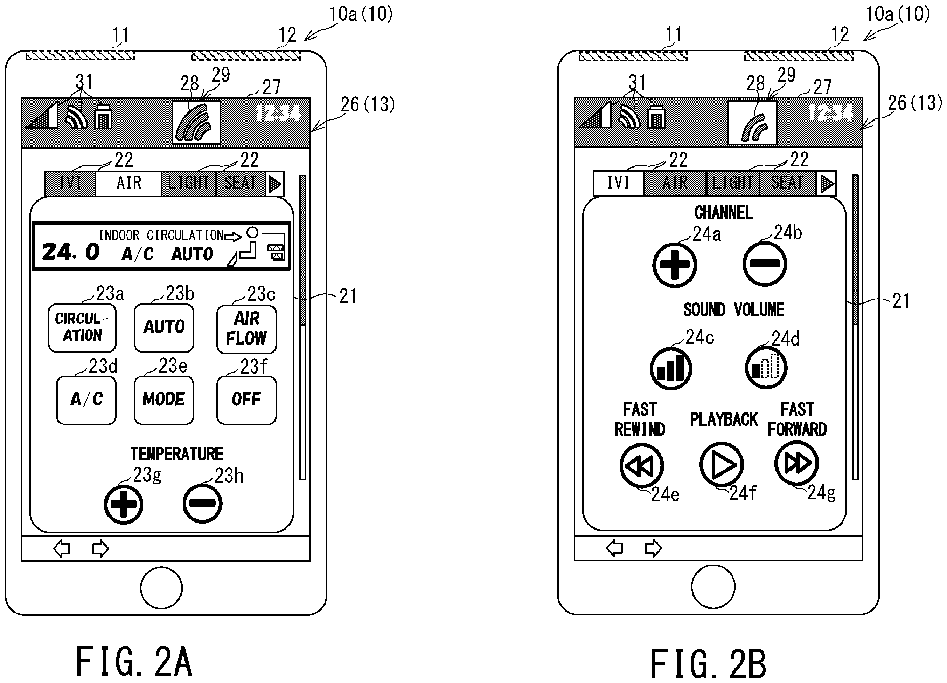

Fig. 2A and Fig. 2B are schematic diagrams illustrating a smartphone 10a that is one aspect of the remote controller 10 according to the first embodiment.

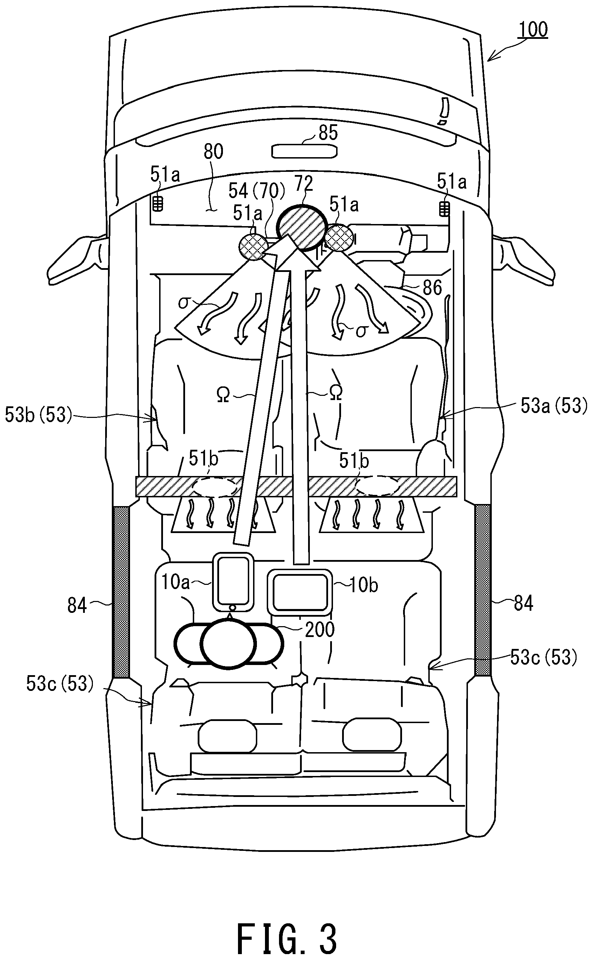

Fig. 3 is a schematic view of the inside of the vehicle 100 provided with a communication-environment sending device 70 according to the first embodiment and the target in-vehicle devices 51 to 54, when viewed from the roof side.

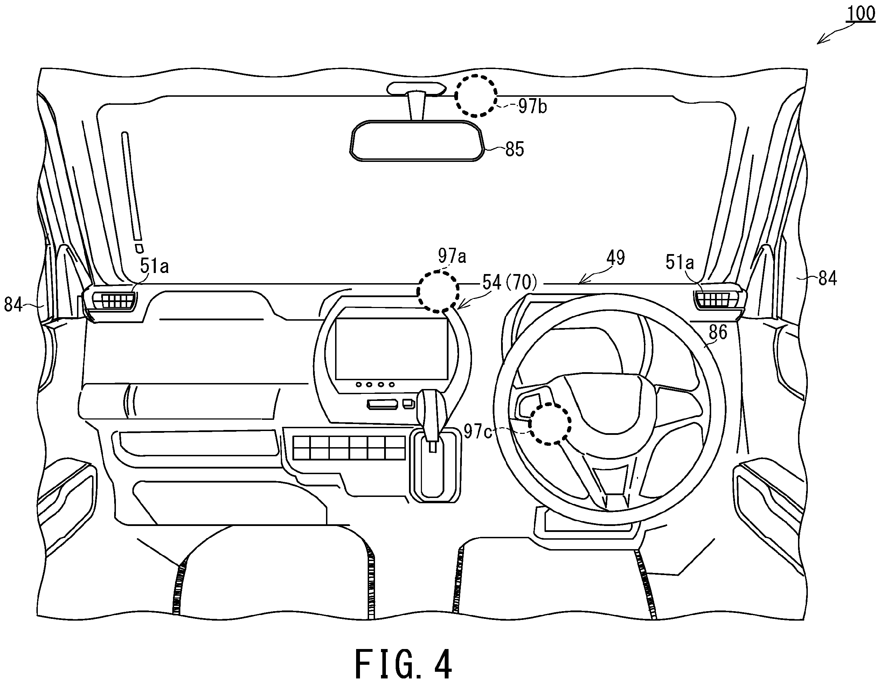

Fig. 4 is a schematic view of the periphery of an inner panel 80 provided with the communication-environment sending device 70 according to the first embodiment.

### <Remote Controller 10>

The remote controller 10 is a portable terminal (i.e., mobile terminal) 10a owned by a user 200, as exemplified by a smartphone shown in Fig. 2A and Fig. 2B. The remote controller 10 may also be a PC (Personal Computer), a wearable device, a public terminal, a specially designed and manufactured remote controller, and/or an in-vehicle operation terminal 10b installed around the rear seat 53c (Fig. 3).

In the following embodiments, a description will be given of a case where the portable terminal 10a is used as the remote controller 10 by installing an application program developed for remote control on the portable terminal 10a.

The remote controller 10 includes a speaker 11, a microphone 12, a display 13, a memory 14, and processing circuitry 15 as shown in Fig. 1.

The memory 14 is configured as, for example, a ROM (Read Only Memory), a RAM (Random Access Memory), and/or an HDD (Hard Disk Drive).

The processing circuitry 15 implements respective functions of a transmitter/receiver 17, an information receiver 18, a controller 19, and an input/output interface 20 by executing the programs stored in the memory 14.

The transmitter/receiver 17 transmits an ultrasonic signal Ω, which controls the operation of the target in-vehicle devices 51 to 54, via the speaker 11. The speaker 11 may be an existing speaker provided for audio or may be a dedicated speaker separately provided for ultrasonic communication. The target in-vehicle devices 51 to 54 to be remotely controlled by this ultrasonic signal Ω are, for example, an air conditioner 51, a lighting device 52, a seat 53, and an IVI (In-Vehicle Infotainment) 54. The target in-vehicle devices are not particularly limited to the above aspects as long as they are electronically controllable in-vehicle accessories such as a locking mechanism of a door opening/closing lever, an in-vehicle camera, a conventional navigation system, and an audio device.

The IVI 54 is, for example, a system that provides various functions such as a navigation function, a location information service function, a multimedia reproduction function of music and video, a voice communication function, a data communication function, and an Internet connection function in a complex manner.

The IVI 54 will be described in detail in the description of the vehicle 100 described below.

Each of the target in-vehicle devices 51 to 54 is connected by a communication network 90 in the vehicle such as a CAN (Controller Area Network) and a LIN (Local Interconnect Network). For example, the IVI 54 is provided with an ultrasonic receiver 79, and the ultrasonic receiver 79 receives the ultrasonic signal Ω emitted by the remote controller 10. Further, the IVI 54 serves as a repeater (i.e., relay device) so as to transmit an operation instruction to the target in-vehicle devices 51 to 54 via the communication network 90.

The entire system may be configured such that each of the target in-vehicle devices 51 to 54 is provided with its own ultrasonic receiver 79 and is directly and remotely controlled by the remote controller 10 so as to exert its function. In response to remote control, for example, in the case of the multimedia playback function of the IVI 54, the functions of start, stop, volume increase/decrease, media reproduction, fast-forward or fast-rewind are executed.

In the following, a description will be given of a case where the target in-vehicle devices 51 to 54 constitute the IVI 54 and the microphone 72 of the IVI 54 capable of detecting the ultrasonic signal Ω is provided on the display 71, which is disposed between the driver's seat 53a and the passenger seat 53b on the inner panel 80, as shown in Fig. 3 and Fig. 4.

The command of ultrasonic communication may be acquired from a server 400 connected by the Internet 300. In addition, the entire system may be configured such that basic commands are provided by memories 14 and 73 of the respective devices 10 and 70 and additional commands are acquired from the server 400.

Returning to Fig. 1, description of the configuration of the remote controller 10 will be continued.

The information receiver 18 detects information related to noise sound inside the vehicle 100 (hereinafter, referred to as "noise-related information").

The noise-related information is information on disturbance that hinders ultrasonic communication and information on underlying causes of such disturbance, as exemplified by the traveling speed (i.e., velocity) of the vehicle 100, the traveling acceleration of the vehicle 100, the opening degree of the window 84, and the air-flow volume of the air conditioner 51.

For example, the conditioned air σ to be sent from an air outlet 51a of the air conditioner 51 in Fig. 3 forms a temperature interface between the portable terminal 10a to be operated by the user 200 and the microphone 72 of the IVI 54 due to the temperature difference from the ambient air.

The conditioned air σ to be blown from the air outlet 51a of the front-seat air conditioner and the air outlet 51b of the rear-seat air conditioner flows between the IVI 54 and the portable terminal 10a held by the user 200 seated in the rear seat 53c. When the ultrasonic signal Ω enters the temperature interface formed at the boundary between the conditioned air σ and the ambient air, the ultrasonic signal Ω may be disturbed by reflection at the temperature interface, which may greatly affect ultrasonic communication.

For this reason, the information receiver 18 acquires the blowing sound in the vehicle 100 through the microphone 12 of the portable terminal 10a.

Further, when the air conditioner 51 is operated, operating noise of the air conditioner 51 is generated. For example, motor noise is generated. Further, when the conditioned air σ flows out of the air outlets 51a and 51b, the conditioned air σ generates sound of coming into contact with the fins of the air outlets 51a and 51b. Since this operating noise may include ultrasonic waves that cause disturbance in the frequency band to be used for the ultrasonic signal Ω, such operating noise is also included in the noise-related information. The information receiver 18 may directly acquire the ultrasonic waves included in the operating noise of the devices in the vehicle 100 as the noise-related information.

Even when the microphone 12 of the remote controller 10 cannot perceive ultrasonic waves, the information receiver 18 may learn how to estimate ultrasonic waves from the operating sound by machine learning in advance, and thereby, the ultrasonic component can be estimated with high accuracy from the operating sound of the in-vehicle devices acquired by the existing microphone 12. In particular, when the information receiver 18 learns the disturbance frequency range peculiar to the vehicle 100 in advance for ultrasonic communication, noise sound in the vehicle that seem to be unrelated at first glance can be included in the noise-related information.

The information receiver 18 may determine the moving speed of the portable terminal 10a by the GPS function installed in the portable terminal 10a so as to determine the traveling mode of the vehicle 100. For example, the ultrasonic waves to be generated can be estimated for the respective cases where the vehicle 100 is traveling on the coast, the vehicle 100 is rapidly accelerating, and the vehicle 100 is traveling electrically.

The controller 19 uses the acquired noise-related information to calculate degree of smoothness of wireless communication (i.e., probability of successfully transmitting the wireless signal to the receiving side in terms of disturbance factors, and hereinafter, referred to as a "propagability index") for the ultrasonic signal Q.

The controller 19 calculates the propagability index of the ultrasonic signal Ω from the acquired noise-related information. For example, when the blowing noise is loud, it can be estimated that the air circulation inside the vehicle is strong and the propagability index of the ultrasonic signal Q is low. When the ultrasonic wave contained in this blowing noise has a frequency far from the frequency of the ultrasonic signal Q, the influence on the propagability index is small.

In addition, the controller 19 also calculates intensity of disturbance to be generated by this operating sound in the ultrasonic-communication frequency band for the operating sound of the air conditioner 51, and the propagability index is calculated from this intensity.

Ultrasonic waves can also be generated from, for example, the inflow and outflow of air due to opening of the window 84, the opening and closing noise of the window 84, and the switching noise to be generated from the driving source of the vehicle 100 and the battery. Since these noises may also interfere with ultrasonic communication, such noises are also included in the noise-related information.

The display 13 is, for example, a touch panel having both of an input device for inputting data according to an operation of the user 200 and a display device such as a liquid crystal display device for displaying data.

As shown in Fig. 2A and Fig. 2B, for example, the operation page 21 of "IVI", "air conditioner", "lighting", and "seat" are displayed on the display 13 in a switchable manner by the tab 22.

For example, Fig. 2A illustrates the operation page 21 for operating the air conditioner 51, and Fig. 2B illustrates the operation page 21 for operating the IVI 54. On the operation page 21 of the air conditioner 51 in Fig. 2A, the air conditioner 51 is adjusted by remote operation with the use of eight buttons 23a to 23h such as a circulation switching button 23a, an AUTO button 23b, an air-flow volume button 23c, and a compressor drive button 23d.

When the tab 22 of "IVI" is touched, the screen is switched to the operation page 21 of the IVI 54 of Fig. 2B, and the IVI 54 is remotely controlled with the use of various buttons 24a to 24g such as the channel buttons 24a and 24b.

Although it is not shown, the brightness adjustment and ON/OFF of the lighting device 52 are remotely controlled. For the seat 53, the reclining angle adjustment and the front-rear position adjustment are remotely controlled.

On the status bar 27 at the upper end of the display 13 (i.e., display screen 26), various icons 31 indicating the remaining battery level of the portable terminal 10a and the state of the radio field strength for wireless communication are displayed.

In the portable terminal 10a according to the first embodiment, the display 13 displays the calculated propagability index as the communication quality level of the ultrasonic signal Ω, for example, on the status bar 27.

The communication quality level is represented in four stages by the number of 0 to 3 arcs 28 as shown in Fig. 2A and Fig. 2B, for example.

When the communication environment of the ultrasonic signal Q is satisfactory and the propagability index is high, three arcs 28 are displayed by the icon 31 as shown in Fig. 2A. When the propagability index declines by one level from the state of Fig. 2A, two arcs 28 are displayed as shown in Fig. 2B.

The display format of the communication quality level is not limited to the fan-shaped icon 31 in which the arcs 28 shown in Fig. 2A and Fig. 2B are arranged concentrically, and the communication quality level may be represented by, for example, the number of antenna bars or numbers.

The display position of the communication quality level is not particularly limited to the status bar 27, and may be anywhere on the display screen 26 as long as the user 200 can visually recognize it.

In accordance with the propagability index, notification of specific actions for improving the propagability index may be executed for the user 200. In detail, the display 13 (i.e., display screen 26) may display instruction words such as "Please point the portable terminal toward the in-vehicle receiver" and/or "Please bring the portable terminal closer to the in-vehicle receiver". Instead of displaying the notification on the display screen 26, the notification may be made by voice, and the notification aspect is not limited to a specific method. When the specific operation is notified in this manner, the user can grasp that the communication quality level is low and can also take specific measures to raise the communication quality level by himself/herself.

Since the portable terminal 10a has such a communication environment checking function, the user 200 can check the communication quality level on the remote controller 10 before or during the remote control and can grasp whether the ultrasonic communication can be used or not.

When the user repeatedly uses the communication environment checking function, the user will be able to predict under what circumstances the ultrasonic communication will be difficult to use.

### <Vehicle 100>

Next, a description will be given of the communication environment sending device 70 (hereinafter, simply referred to as "sending device 70"), which cooperates with the remote controller 10, and the vehicle 100 provided with this sending device 70 by referring to Fig. 3 and Fig. 4 in addition to Fig. 1.

The vehicle 100 is provided with a vehicle controller (i.e., ECU or Electronic Control Unit) 91, various sensors 92 to 96, the IVI 54, and the target in-vehicle devices 51 to 54.

These devices (91 to 96) are interconnected by the above-described communication network 90 to exchange information.

The ECU 91 is configured as a plurality of in-vehicle computers provided in various places in the vehicle 100, and has, for example, an engine control function, a handle control function, a brake control function, and a data security function. For example, the ECU 91 for brake control receives information on the operation of the accelerator pedal and the brake pedal and the running speed via the pedal stroke sensor 93 and the vehicle speed sensor 92, converts the received information into a control signal, and applies driving force or braking force to the front wheels or the rear wheels by the control signal.

The IVI 54 includes, for example, a touch panel display 71 having both of an input device for inputting data according to the operation of the user 200 and a display device such as a liquid crystal display device for displaying data.

In addition to the touch panel display 71, the IVI 54 includes an in-vehicle microphone 72, an in-vehicle memory 73, an in-vehicle speaker 74, and in-vehicle processing circuitry 75. In the description of the IVI 54, in order to distinguish the IVI 54 from the components of the portable terminal 10a (i.e., the speaker 11, the microphone 12, the display 13, the memory 14, and the processing circuitry 15), the term "in-vehicle" is added to the beginning of each component name of the IVI 54 as required.

The in-vehicle memory 73 is composed of, for example, a ROM, a RAM, or an HDD.

When the in-vehicle processing circuitry 75 executes and processes instructions on the basis of the programs stored in the in-vehicle memory 73, the IVI 54 exerts various functions such as the above-described navigation function and location information service function.

As described above, the plurality of air outlets 51a and 51b of the air conditioner 51 are provided in the vehicle 100 so as to be positioned appropriately with respect to the target to which the conditioned air σ is sent.

The air outlet 51a provided for the front seats 53a and 53b is near the display 71 of the IVI 54 while being far from the rear seats 53c. Thus, even when the conditioned air σ is blown from the air outlet 51a, the conditioned air σ is not sufficiently detected by the portable terminal 10a of the user 200 seated in the rear seat 53c. However, even when it is not detected by the portable terminal 10a, this conditioned air σ forms a temperature interface near the IVI 54 and becomes a factor that hinders ultrasonic communication.

Thus, in order to make the communication environment checking function of the portable terminal 10a more accurate, the IVI 54 is preferably provided with a transmission function so as to serve as a sending device 70 configured to notify the remote controller 10 of the disturbance occurrence status that interferes with the ultrasonic communication in the vicinity of the IVI 54.

Specifically, the IVI 54 (70) further includes the functions of a detector 76, a positional information receiver 77, and a sender 78.

The detector 76 receives the noise-related information from the ECU 91 and the various sensors 92 to 96 connected to the IVI 54 in the communication network 90.

The detector 76 acquires the noise-related information in the vehicle from these connected devices 91 to 96.

The information to be detected by the detector 76 is, for example, the traveling speed of the vehicle 100, the traveling acceleration of the vehicle 100, the driving state of the motor, the driving state of the engine, the opening degree of the window 84, and/or air-flow volume of the air conditioner. Further, the vehicle parameter may be another physical quantity which is related to the vehicle 100 and is derived by combining the above-described parameters such as the traveling speed.

For example, the speed or acceleration to be detected by the detector 76 is detected via the vehicle speed sensor 92.

The speed and acceleration may be acquired by the positional information receiver 77 via the GPS (Global Positioning System) sensor 96, which is a satellite positioning system.

The detector 76 detects the opening degree of the window 84 via the window sensor 94 for the following reason. When the window 84 is fully opened, the amount of air flowing into the vehicle is large, and it is considered that the disturbance affecting the ultrasonic signal Ω is also large.

Further, the sending device 70 may directly detect the noise that is actually being generated through the in-vehicle microphone 72, similarly to the portable terminal 10a.

The sender 78 is provided in the vehicle and converts the noise-related information in the vehicle into the ultrasonic signal Ω (i.e., environmental notification signal) for environmental notification so as to send the ultrasonic signal Q to the remote controller 10.

Since the noise reduces the quality of the ultrasonic signal Q, the IVI 54 acquires the noise-related information in the vehicle, especially around the IVI 54 in this manner and includes the noise-related information in the transmission signal to notify the portable terminal 10a of the noise-related information.

The controller 19 of the portable terminal 10a reflects the notified noise-related information in the display of the communication quality level. The communication form for notifying the noise-related information around the IVI 70 to be sent to the portable terminal 10a is ultrasonic communication, and in embodiments not forming part of the claimed invention wireless communication, or infrared communication.

The sending device 70 does not have to be built into the IVI 54. As shown in Fig. 4, the sending device 70 may be externally attached to the surface 97a of the IVI 54 or may be provided in the peripheral area 97b of the rearview mirror 85. Additionally or alternatively, the installation location of the sending device 70 may be on the handle97c, for example.

The respective functions (17 to 20, 76 to 79) of the processing circuitry 15 and 75 of the remote controller 10 and the target in-vehicle devices 51 to 54 can be achieved by hardware processing such as an ASIC (Application Specific Integration Circuit) and an FPGA instead of software processing.

Further, these functions can be achieved by combining software processing and hardware processing.

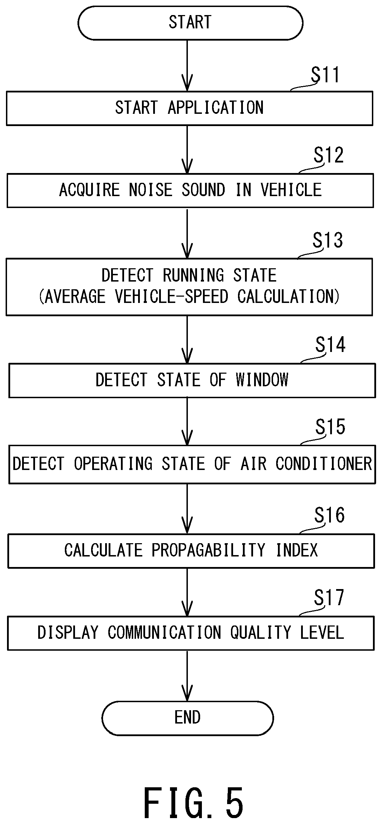

Next, a description will be given of the operation procedure of the remote controller 10 and the sending device 70 according to the first embodiment on the basis of the step number in the flowchart of Fig. 5 by referring to Fig. 1 to Fig. 4 as required.

First, in the step S11, the user 200 starts a remote-control application on the portable terminal 10a in order to start or tune the target in-vehicle devices 51 to 54.

When the remote-control application is started, the operation page 21 for each of the target in-vehicle devices 51 to 54 shown in Fig. 2A and Fig. 2B is displayed on the display screen 26 of the portable terminal 10a. In the case of using the in-vehicle sending device 70, the portable terminal 10a sends the ultrasonic signal Q to the sending device 70 so as to notify that the remote-control application has been started.

Next, the information receiver 18 of the portable terminal 10a acquires the noise-related information in the steps S12 to S15. The execution order of the steps S12 to S15 is not limited to a specific order.

For example, in the step S12, the information receiver 18 acquires the noise sound in the vehicle 100 via the microphone 12 of the portable terminal 10a.

In the step S13, the information receiver 18 detects the running state of the vehicle 100 by using the GPS function of the portable terminal 10a or via the respective sensors 92 to 96. At this time, the average speed may be used instead of acquiring the instantaneous speed of the vehicle 100.

Further, the opening degree of each window 84 and the operating state of the air conditioner 51 are detected from the microphone 12 in the steps S14 and S15.

In the portable terminal 10a, the opening degree of each window 84 and the operating state of the air conditioner 51 are both detected as noise sound. Since the outside air flowing into the vehicle and the conditioned air σ blown from the air conditioner 51 are both characterized by their strength and frequency, the opening of the window 84 and the driving state of the air conditioner 51 can be identified and distinguished from each other by causing the processing circuitry 15 to learn their characteristics under machine learning in advance. The traveling direction of the vehicle 100 acquired by the GPS function and the generation direction of the noise sound may be used as elements for specifying the opening degree of the window 84 and the driving state of the air conditioner 51.

The detection in the steps S12 to S15 may be performed by the sending device 70. In this case, the sending device 70 acquires the noise-related information when being notified that the remote-control application of the remote controller 10 has started. In this case, as the microphone for acquiring the noise sound in the step S12, the in-vehicle microphone 72 provided in the sending device 70 is used as described above.

The running state of the vehicle 100, the state of the window 84, and the operating state of the air conditioner 51 in the steps S13 to S15 are acquired through the communication network 90. The running state may be acquired by using the GPS sensor 96 instead of the vehicle speed sensor 92 or the pedal stroke sensor 93.

The sending device 70 sends the above-described noise-related information to the portable terminal 10a by, for example, ultrasonic communication. Since the sending device 70 sends the noise-related information to the portable terminal 10a in this manner, the portable terminal 10a can calculate the propagability index more accurately.

When transmission of the noise-related information from the sending device 70 is requested each time the operation page 21 of the remote-control application is activated, the user can check the communication quality level at the timing when trying to use remote-control with the portable terminal 10a. The timing of requesting the noise-related information from the sending device 70 is not limited to the above-described case, and may be automatically requested at regular intervals, for example.

Next, the controller 19 calculates the propagability index on the basis of the noise-related information in the step S16.

In some cases, the communication environment is bad and the sending device 70 cannot detect the activation of the remote-control application. In some cases, the sending device 70 cannot detect the ultrasonic signal Ω having been sent to the portable terminal 10a.

In both of these cases, the portable terminal 10a does not receive the ultrasonic signal Ω from the sending device 70 even after the remote-control application is started. When the portable terminal 10a does not receive the ultrasonic signal Ω from the sending device 70 within a predetermined time, the portable terminal 10a determines the communication environment to be bad and calculates the propagability index on the basis of this determination.

The controller 19 displays the communication quality level on the status bar 27 of the display 13 with the icon 29 in the step S17 (END).

According to the remote controller 10 of the first embodiment as described above, the user 200 can check the communication environment of the ultrasonic communication.

When checking of the communication environment is repeated, the user will be able to predict under what circumstances the ultrasonic communication will be difficult to use.

### (Second Embodiment)

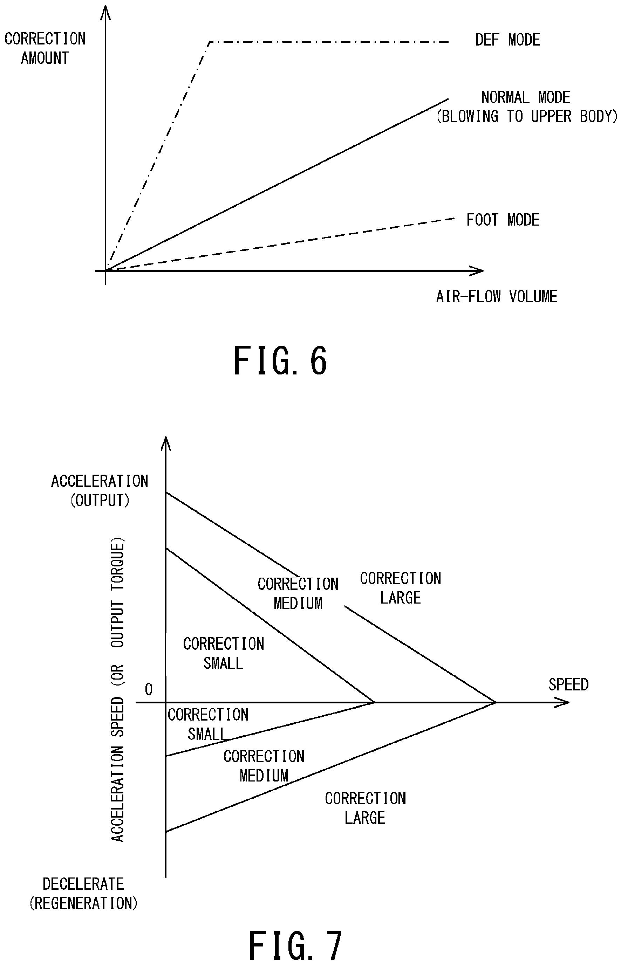

Fig. 6 is a schematic diagram illustrating the relationship between air-flow volume and correction amount in the second embodiment.

In the remote controller 10 according to the second embodiment, the controller 19 corrects the ultrasonic signal Ω transmitted from the remote controller 10. The correction amount to this ultrasonic signal Ω is changed depending on the acquired noise-related information.

As described in the first embodiment, a plurality of air outlets 51a and 51b of the air conditioner 51 are provided in the vehicle 100. The blowing direction also differs depending on various modes such as a normal mode in which the air is blown to the upper body of the passenger, a FOOT mode, and a defroster mode (DEF mode).

Thus, the influence of the conditioned air σ on the ultrasonic communication depends on which mode is being executed during the ultrasonic communication. For example, in the FOOT mode, the conditioned air σ flows near the floor in the vehicle to warm the passenger's feet. Hence, when the air conditioner 51 is operating in the FOOT mode, the influence of the blown air on the ultrasonic communication is small.

Thus, for example, as shown in Fig. 6, the correction amount to the ultrasonic signal Ω is changed depending on the mode being executed.

For example, it is assumed that the sending device 70 installed in the peripheral area 97b of the rear-view mirror 85 in Fig. 4 has acquired information on the air-flow volume and the operation mode of the air conditioner 51 through the communication network 90.

Under this assumption, when the operation mode is the FOOT mode, it is considered that the influence of the operation on the ultrasonic communication is not large. Thus, even when the information that the air-flow volume of the air conditioner 51 is large (i.e., strong) is received from the sending device 70, the correction amount of the ultrasonic signal Ω in the controller 19 is set small. That is, as shown in Fig. 6, the increasing gradient of the correction amount to the ultrasonic signal Q with the increase of the air-flow volume is set to be different depending on each operation mode.

Fig. 6 illustrates the relationship between the air-flow volume and the correction amount when the in-vehicle microphone 72 is provided at the upper portion of the vehicle interior. The function of the air-flow volume and the correction amount in each mode changes depending on the installation position of the sending device 70. The correction amount is appropriately determined depending on the distance between the microphone 72 of the sending device 70 and the air outlets 51a to 51c, and susceptibility (i.e., exposure) to the conditioned air σ.

It is also preferred to change the correction amount depending on the opening degree of the window 84 to be acquired from the window sensor 94. This is because the flow rate of the outside air flowing in from the window 84 largely depends on the opening degree of the window 84, and the outside air generates convection in the vehicle that has a great influence on the ultrasonic communication.

The operating status of each of the in-vehicle devices acquired via the communication network 90 is added to the correction to the ultrasonic signal Ω in this manner, and thus, the communication quality can be improved by the effective correction.

Fig. 7 is a map illustrating the relationship between speed acceleration, and correction amount.

In the second embodiment, the map that defines the speed, acceleration, and correction amount shown in Fig. 7 is stored in the memory 14. This map specifies and defines the optimum correction amount for each speed and acceleration on the basis of the measurement results of the ultrasonic characteristics of the vehicle 100 for each speed and acceleration.

The controller 19 determines the correction coefficient on the basis of the mapped correction amount, and corrects the ultrasonic signal Ω to be transmitted from the portable terminal 10a.

For example, when the vehicle 100 is accelerating, the engine operates at a high output, and thus, it is considered that the ultrasonic intensity included in the combustion sound is strong as well as the combustion sound. Hence, as the acceleration is strengthened, the correction amount is also set to increase from "small" to "medium" to "large".

At the time of coasting, there is no combustion noise because the fuel is being cut, so it is considered that there is no influence from ultrasonic waves contained in the combustion noise. However, when the vehicle 100 is a hybrid vehicle, a regenerative sound is generated by the electric motor at the time of coasting. The same applies to the regenerative sound for electric vehicles.

Thus, in consideration of the regenerative sound to be generated at the time of coasting and/or braking, the correction amount of the negative acceleration area of the map is set to "medium" or "large" so as to correspond to the output of the motor.

Since the noise-related information sent from the sending device 70 is usually included in the ultrasonic signal Q as a carrier wave, in some cases, it does not reach the remote controller 10 sufficiently due to the disturbance in the ultrasonic frequency band. In this case, the correction amount may be determined on the basis of the noise-related information received in the past few minutes.

Except for correcting the ultrasonic signal Ω and changing the correction amount on the basis of the noise-related information, the second embodiment is the same as the first embodiment in terms of configuration and operation, and duplicate description is omitted.

According to the remote controller 10 of the second embodiment as described above, in addition to that the effects of the first embodiment, correction can be performed depending on the noise environment. Hence, even if there is a disturbance in the vehicle, the communication quality of the ultrasonic signal Ω can be maintained at high quality.

### (Third Embodiment)

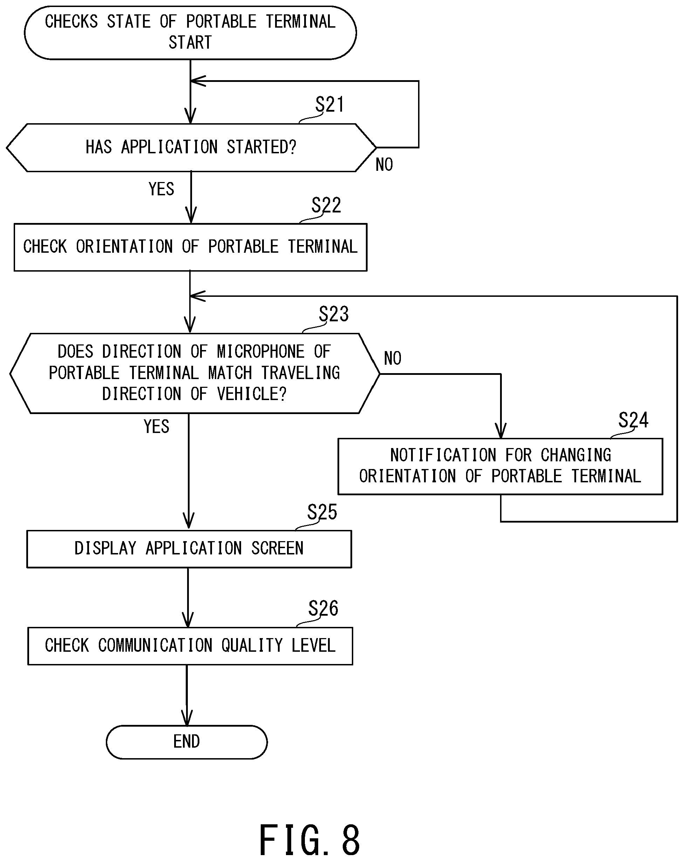

Fig. 8 is a flowchart illustrating the operation of the remote controller 10 according to the third embodiment.

When the controller 19 determines that the communication quality level is below a predetermined level and the remote controller 10 is not directed to the target in-vehicle devices 51 to 54, the remote controller 10 according to the third embodiment notifies the user of the instruction to direct the remote controller 10 toward the target in-vehicle devices 51 to 54. That is, when the IVI 54 serves as a repeater (i.e., relay device) for the other target in-vehicle devices 51-53, the portable terminal 10a notifies the user 200 of the instruction to direct the portable terminal 10a at the IVI 54.

The procedure will be described by referring to the flowchart of Fig. 8 in detail.

First, the information receiver 18 determines whether the remote-control application has started or not. If the determination result is affirmative (YES in the step S21), the information receiver 18 checks the orientation of the portable terminal 10a in the step S22.

For the checking of the orientation of the portable terminal 10a, the electronic compass installed in the portable terminal 10a is used. When the user 200 sits down and holds the portable terminal 10a in the orientation by which it can be correctly used, the speaker 11 of the portable terminal 10a is considered to face the front of the vehicle 100.

Next, in the step S23, the controller 19 checks whether the direction of the speaker 11 of the portable terminal 10a and the traveling direction of the vehicle 100 match or not.

Since the direction of the vehicle 100 matches the traveling direction of the vehicle 100, if the traveling direction and the orientation of the portable terminal 10a match (YES in the step S23), it can be estimated that the portable terminal 10a is facing forward in the vehicle 100.

Normally, the target in-vehicle devices 51 to 54 are often placed in the front part of the vehicle interior. Even if they are installed in the rear seat 53c, they are disposed in front of the user 200 in the vehicle traveling direction. Thus, if the traveling direction of the vehicle 100 and the orientation of the portable terminal 10a match, it can be said that the direction of the portable terminal 10a is appropriate.

If the traveling direction and the orientation of the portable terminal 10a do not match (NO in the step S23), it is determined that the portable terminal 10a is not directed toward the target in-vehicle devices 51 to 54. In this case, in the step S24, the controller 19 notifies the user 200 that the orientation of the portable terminal 10a should be changed, by displaying instruction on the display 13 or by voice, for example. The user 200 changes the orientation of the portable terminal 10a in such a manner that a suitable communication state can be established.

The components of the portable terminal 10a set for matching the traveling direction are not limited to the speaker 11 but also appropriate components such as the microphone 12 depending on the characteristics of the model.

When the direction of the microphone 12 of the portable terminal 10a and the traveling direction of the vehicle 100 coincide (YES in the step S23), in the step S25, the controller 19 notifies the user 200 of the coincidence by displaying the operation page 21 on the display screen 26, for example.

In recent years, many smartphones 10a are standardly provided with a function to change the display form such as the display direction and the aspect ratio at any time depending on how the user 200 holds it. Such a technique may be applied to the display form in the step S25. For example, the display form in the step S25 may be a display form of prompting the user 200 to turn the portable terminal 10a in his/her hand into an appropriate direction by fixing a figure on the display screen 26 in a specific direction inside the vehicle such that the speaker 11 facing downward is turned upward. With such a display mode, the user 200 can check the appropriate orientation of the portable terminal 10a and adjust the orientation with minimum attention.

Further, the communication quality level is displayed on the display screen 26 in the step S26 similarly to the first embodiment (END).

Except for prompting the user to match the traveling direction of the vehicle 100 with the orientation of the portable terminal 10a, the third embodiment is the same as the first embodiment in terms of configuration and operation, and duplicate description is omitted.

According to the remote controller 10 of the third embodiment as described above, in addition to the effects of the first embodiment, the orientation adjustment is promoted and a suitable communication environment can be constructed before the user 200 remotely controls the target in-vehicle devices 51 to 54. Hence, the communication quality level can be improved.

According to the remote controller, the sending device, and the communication-environment check method of at least one embodiment described above, the propagability index is visualized, which allows the user to check the communication environment of the ultrasonic communication.

## Claims

1. A remote controller (10) comprising:
a speaker (11) configured to send an ultrasonic signal that controls an action of an in-vehicle device;
an information receiver (18) configured to detect information related to noise sound inside the vehicle;
a controller (19) configured to calculate a propagability index of the ultrasonic signal from the information related to noise sound; and
a display (13) configured to display the propagability index as communication quality level of the ultrasonic signal.

2. The remote controller (10) according to claim 1, wherein the information related to noise sound is at least one of traveling speed of the vehicle, traveling acceleration of the vehicle, opening degree of a window, and air-flow volume of an air conditioner.

3. The remote controller (10) according to claim 1 or claim 2, wherein:
the information receiver (18) is configured to detect output of an in-vehicle motor; and
the controller (19) is configured to change correction amount of the ultrasonic signal depending on the output of the in-vehicle motor.

4. The remote controller (10) according to claim 1,
wherein the controller (19) is configured to output an instruction to direct the remote controller toward the in-vehicle device, when the communication quality level is equal to or lower than a predetermined level and the remote controller is not directed toward the in-vehicle device.

5. A communication-environment sending device (70) comprising:
a detector (76) that is provided in a vehicle (100) and is configured to acquire information related to noise sound in the vehicle; and
a sender (78) that is provided in the vehicle and is configured to convert the information related to noise sound in the vehicle into an ultrasonic environmental notification signal, send the ultrasonic environmental notification signal to a remote controller (10) according to any of claims 1-4 and disposed in the vehicle.

6. The communication-environment sending device (70) according to claim 5, wherein the information related to noise sound is at least one of traveling speed of the vehicle (100), traveling acceleration of the vehicle, opening degree of a window, and air-flow volume of an air conditioner.

7. A communication-environment check method that controls an action of an in-vehicle device by an ultrasonic signal, the communication-environment check method comprising:
controlling an action of an in-vehicle device by an ultrasonic signal with a remote controller according to any of claims 1-4;
receiving information related to noise sound in the vehicle by the remote controller;
calculating (S16), by the controller of the remote controller, a propagability index of the ultrasonic signal from the information related to noise sound; and
displaying (S17) , by the display of the remote controller, the propagability index as a communication quality level of the ultrasonic signal.

## Patentansprüche

1. Fernsteuerung (10), umfassend:
einen Lautsprecher (11), der zum Senden eines Ultraschallsignals konfiguriert ist, das eine Aktion einer fahrzeuginternen Vorrichtung steuert;
einen Informationsempfänger (18), der zum Detektieren von Informationen betreffend Störgeräusche im Inneren des Fahrzeugs konfiguriert ist;
eine Steuerung (19), die zum Berechnen eines Ausbreitbarkeitsindex des Ultraschallsignals anhand der Informationen betreffend Störgeräusche konfiguriert ist; und
eine Anzeige (13), die zum Anzeigen des Ausbreitbarkeitsindex als Kommunikationsqualitätsniveau des Ultraschallsignals konfiguriert ist.

2. Fernsteuerung (10) nach Anspruch 1, wobei die Informationen betreffend Störgeräusche mindestens eines von Fahrgeschwindigkeit des Fahrzeugs, Fahrbeschleunigung des Fahrzeugs, Öffnungsgrad eines Fensters und Luftstromvolumen einer Klimaanlage sind.

3. Fernsteuerung (10) nach Anspruch 1 oder Anspruch 2, wobei:
der Informationsempfänger (18) zum Detektieren einer Ausgabe eines fahrzeuginternen Motors konfiguriert ist; und
die Steuerung (19) zum Ändern eines Korrekturbetrags des Ultraschallsignals in Abhängigkeit von der Ausgabe des fahrzeuginternen Motors konfiguriert ist.

4. Fernsteuerung (10) nach Anspruch 1,
wobei die Steuerung (19) zum Ausgeben einer Anweisung zum Richten der Fernsteuerung auf die fahrzeuginterne Vorrichtung konfiguriert ist, wenn das Kommunikationsqualitätsniveau gleich oder kleiner als ein vorbestimmtes Niveau ist und die Fernsteuerung nicht auf die fahrzeuginterne Vorrichtung gerichtet ist.

5. Kommunikationsumgebungssendevorrichtung (70), umfassend:
einen Detektor (76), der in einem Fahrzeug (100) bereitgestellt und zum Erfassen von Informationen betreffend Störgeräusche in dem Fahrzeug konfiguriert ist; und
einen Sender (78), der in dem Fahrzeug bereitgestellt und zum Umwandeln der Informationen betreffend Störgeräusche in dem Fahrzeug in ein Ultraschall-Umgebungsbenachrichtigungssignal sowie zum Senden des Ultraschall-Umgebungsbenachrichtigungssignals an eine in dem Fahrzeug angeordnete Fernsteuerung (10) nach einem der Ansprüche 1-4 konfiguriert ist.

6. Kommunikationsumgebungssendevorrichtung (70) nach Anspruch 5, wobei die Informationen betreffend Störgeräusche mindestens eines von Fahrgeschwindigkeit des Fahrzeugs (100), Fahrbeschleunigung des Fahrzeugs, Öffnungsgrad eines Fensters und Luftstromvolumen einer Klimaanlage sind.

7. Kommunikationsumgebungsprüfverfahren, das eine Aktion einer fahrzeuginternen Vorrichtung durch ein Ultraschallsignal steuert, wobei das Kommunikationsumgebungsprüfverfahren Folgendes umfasst:
Steuern einer Aktion einer fahrzeuginternen Vorrichtung durch ein Ultraschallsignal mit einer Fernsteuerung nach einem der Ansprüche 1-4;
Empfangen von Informationen betreffend Störgeräusche in dem Fahrzeug durch die Fernsteuerung;
Berechnen (S16) eines Ausbreitbarkeitsindex des Ultraschallsignals anhand der Informationen betreffend Störgeräusche durch die Steuerung der Fernsteuerung; und
Anzeigen (S17) des Ausbreitbarkeitsindex als Kommunikationsqualitätsniveau des Ultraschallsignals durch die Anzeige der Fernsteuerung.

## Revendications

1. Commande à distance (10) comprenant :
un haut-parleur (11) configuré pour émettre un signal ultrasonore qui commande une action d'un dispositif embarqué dans un véhicule ;
un récepteur d'informations (18) configuré pour détecter des informations relatives au bruit à l'intérieur du véhicule ;
une commande (19) configurée pour calculer un indice de propagation du signal ultrasonore depuis les informations relatives au bruit ; et
un affichage (13) configuré pour afficher l'indice de propagation en tant que niveau de qualité de communication du signal ultrasonore.

2. Commande à distance (10) selon la revendication 1, dans laquelle les informations relatives au bruit sont l'un ou plusieurs parmi la vitesse de déplacement du véhicule, l'accélération de déplacement du véhicule, le degré d'ouverture d'une fenêtre et le volume d'air d'un climatiseur.

3. Commande à distance (10) selon la revendication 1 ou la revendication 2, dans laquelle :
le récepteur d'informations (18) est configuré pour détecter une sortie d'un moteur embarqué dans un véhicule ; et
la commande (19) est configurée pour modifier la quantité de correction du signal ultrasonore en fonction de la sortie du moteur embarqué dans un véhicule.

4. Commande à distance (10) selon la revendication 1,
dans laquelle la commande (19) est configurée pour émettre une instruction pour diriger la commande à distance vers le dispositif embarqué dans un véhicule, lorsque le niveau de qualité de communication est égal ou inférieur à un niveau prédéterminé et que la commande à distance n'est pas dirigée vers le dispositif embarqué dans un véhicule.

5. Dispositif d'envoi d'environnement de communication (70) comprenant :
un détecteur (76) qui est fourni dans un véhicule (100) et configuré pour acquérir des informations relatives au bruit dans le véhicule ; et
un émetteur (78) qui est fourni dans le véhicule et configuré pour convertir les informations relatives au bruit dans le véhicule en un signal de notification d'environnement ultrasonore, envoyer le signal de notification d'environnement ultrasonore à une commande à distance (10) selon l'une quelconque des revendications 1 à 4 et disposé dans le véhicule.

6. Dispositif d'envoi d'environnement de communication (70) selon la revendication 5, dans laquelle les informations relatives au bruit sont l'un ou plusieurs parmi la vitesse de déplacement du véhicule (100), l'accélération de déplacement du véhicule, le degré d'ouverture d'une fenêtre et le volume d'air d'un climatiseur.

7. Procédé de vérification d'environnement de communication qui commande une action d'un dispositif embarqué dans un véhicule par un signal ultrasonore, le procédé de vérification d'environnement de communication comprenant :
la commande d'une action d'un dispositif embarqué dans un véhicule par un signal ultrasonore avec une commande à distance selon l'une quelconque des revendications 1 à 4 ;
la réception d'informations relatives au bruit dans le véhicule par la commande à distance ;
le calcul (S16), par la commande de la commande à distance, d'un indice de propagation du signal ultrasonore depuis les informations relatives au bruit ; et
l'affichage (S17), par l'affichage de la commande à distance, de l'indice de propagation en tant que niveau de qualité de communication du signal ultrasonore.
